# NOUVEAU FASCICULE DE BREVET EUROPEEN

(11) **EP 3 147 525 B2**
(45) Date de publication et mention de la décision concernant l'opposition: **07.09.2022**
(45) Mention de la délivrance du brevet: 13.06.2018
(21) Numéro de dépôt: 16188190.9
(22) Date de dépôt: 09.09.2016
(51) Int. Cl.: F16D 13/64

(54) **DISQUE DE FRICTION, NOTAMMENT POUR VEHICULE AUTOMOBILE**
REIBSCHEIBE, INSBESONDERE FÜR KRAFTFAHRZEUG
FRICTION DISC, IN PARTICULAR FOR MOTOR VEHICLE

(30) Priorité: 14.09.2015 FR 1558553
(43) Date de publication de la demande: 29.03.2017
(73) Titulaire: Valeo Embrayages, 80009 Amiens Cedex 2 (FR)
(72) Inventeur: GIRAUD, Eric, 62217 ACHICOURT (FR)
(74) Mandataire: Valeo Powertrain Systems

(56) Documents cités:
- EP-A2- 0 180 389
- EP-B1- 0 797 017
- WO-A1-2006/027552
- WO-A1-2006/027552
- WO-A2-2008/058500
- DE-A1- 4 226 762
- DE-A1- 4 409 253
- DE-A1- 10 227 319
- DE-A1- 10 238 365
- DE-A1- 19 505 620
- DE-A1- 19 530 268
- DE-A1- 19 530 268
- DE-A1-102005 003 507
- DE-C1- 19 529 073
- DE-C1- 19 529 074
- FR-A5- 2 043 374
- FR-A5- 2 043 374
- GB-A- 388 704
- GB-A- 2 257 209

## Description

La présente invention concerne un disque de friction, notamment pour véhicule automobile. Le document DE 195 30 268 A1 divulgue un disque de friction tel que définit dans l'introduction de la revendication 1. Un dispositif d'embrayage comporte classiquement un plateau de pression couplé en rotation à un plateau de réaction, entre lesquels est monté un disque de friction. Les plateaux de pression et de réaction sont par exemple couplés en rotation à un arbre de sortie d'un moteur à combustion interne, tel par exemple qu'un vilebrequin. Le plateau de pression est mobile axialement par rapport au plateau de réaction, entre une position embrayée dans laquelle lesdits plateaux enserrent le disque de friction, et une position débrayée dans laquelle lesdits plateaux libèrent le disque de friction. Le disque de friction est par exemple couplé en rotation à un arbre d'entrée d'une boîte de vitesses. Ainsi, en position embrayée, le couple est transmis du vilebrequin du moteur à l'arbre d'entrée de la boîte de vitesses.

Un tel disque de friction comporte classiquement un support annulaire de part et d'autre duquel sont fixées des garnitures de friction annulaires, destinées à venir frotter contre les plateaux de pression et de réaction du dispositif d'embrayage, en position embrayée.

Le support est généralement constitué de plusieurs pales agencées de façon adjacente afin de former un anneau.

Chaque pale est formée par une tôle ou un clinquant et comporte un bord radialement externe et un bord radialement interne reliés par des bords latéraux, une patte reliant le bord interne de chaque pale à une partie de liaison radialement interne. La partie de liaison est fixée, par exemple par rivetage, à une rondelle de guidage ou à un voile. La rondelle de guidage ou le voile est destiné à être couplé à l'arbre d'entrée d'une boîte de vitesses, soit directement soit par l'intermédiaire de moyens d'amortissement en rotation.

Le support est par exemple composé de huit pales régulièrement réparties sur la circonférence, la partie de liaison de chaque pale étant fixée par au moins deux rivets à la rondelle de guidage ou au voile correspondant.

Ainsi, le nombre de rivets utilisé est élevé et il est nécessaire de disposer d'une presse apte à fournir un effort important pour réaliser une opération constituant à riveter toutes les pales simultanément.

Par ailleurs, compte tenu du nombre de pièces distinctes les unes des autres, un tel montage est relativement fastidieux.

L'invention a notamment pour but d'apporter une solution simple, efficace et économique à ce problème.

A cet effet, elle propose un disque de friction, tel que définit dans la revendication 1. Les pales sont ainsi regroupées par paires au sein d'un même secteur, de sorte que le nombre de pièces distinctes est limité. Par ailleurs, le nombre de rivets utilisés peut être réduit. Les secteurs sont distincts les uns des autres.

La dimension circonférentielle de chaque patte peut être inférieure à la dimension circonférentielle de la pale correspondante.

Par ailleurs, le bord radialement externe de chaque pale peut être courbe et peut être situé en regard du bord radialement externe de la garniture de friction.

De plus, le bord radialement interne de chaque pale peut comporter une première et une seconde zones situées respectivement de part et d'autre de la patte correspondante, lesdites zones étant globalement rectilignes et s'étendant de façon oblique par rapport à la direction circonférentielle, les extrémités desdites zones rectilignes qui sont éloignées de la patte correspondante étant situées radialement à l'intérieur par rapport aux extrémités desdites zones rectilignes qui sont proches de ladite patte.

Le bord radialement externe de la zone de liaison comporte deux zones rectilignes situées circonférentiellement entre lesdites pattes et s'étendant de façon oblique par rapport à la direction circonférentielle, les extrémités desdites zones rectilignes qui sont éloignées des pattes étant situées radialement à l'intérieur par rapport aux extrémités desdites zones rectilignes qui sont proches desdites pattes.

Lesdites zones rectilignes obliques ainsi que les bords latéraux adjacents d'un même secteur définissent une fente de forme complexe, présentant une partie radiale, rattachée à une partie en forme générale de V dont le sommet est tourné radialement vers l'intérieur.

Selon une caractéristique, les bords latéraux des pales peuvent s'étendre radialement, au moins en partie.

Les bords radialement externes des pales ou les bords radialement internes des pales, d'une part, et les bords latéraux correspondants des pales, d'autre part, peuvent être reliés par des zones arrondies et/ou par des zones rectilignes s'étendant de façon oblique par rapport à la direction radiale et par rapport à la direction circonférentielle.

Chaque pale peut être formée par une tôle et peut comporter des plis ou des déformations aptes à conférer à ladite pale une élasticité dans la direction axiale.

Les plis ou déformations élastiques autorisent ainsi un déplacement axial des garnitures de friction lors de l'embrayage, de façon à amortir les chocs et les vibrations en fonctionnement.

En outre, le disque de friction comporte au moins deux secteurs empilés, agencés axialement en regard l'un de l'autre, la garniture de friction étant montée sur les deux secteurs empilés.

Le disque de friction peut également comporter un élément de sortie de couple destiné à être couplé à un arbre d'entrée d'une boîte de vitesses, l'élément de sortie de couple étant relié au support par l'intermédiaire de moyens d'amortissement de torsion.

Lesdits moyens d'amortissement permettent d'amortir les vibrations et les acyclismes de rotation.

L'invention sera mieux comprise et d'autres détails, caractéristiques et avantages de l'invention apparaîtront à la lecture de la description suivante faite à titre d'exemple non limitatif en référence aux dessins annexés dans lesquels :
- les figures 1 à 4 représentent un disque de friction selon une première forme de réalisation de l'invention, en particulier
- la figure 1 est une vue en coupe axiale du disque de friction,
- la figure 2 est une vue éclatée, en perspective du disque de friction,
- la figure 3 est une vue en perspective du disque de friction,
- la figure 4 est une vue de face d'un secteur du support de garnitures,
- la figure 5 est une vue éclatée, en perspective, d'un disque de friction selon une deuxième forme de réalisation non couverte par l'invention,
- les figures 6 et 7 représentent un disque de friction selon une troisième forme de réalisation de l'invention, en particulier,

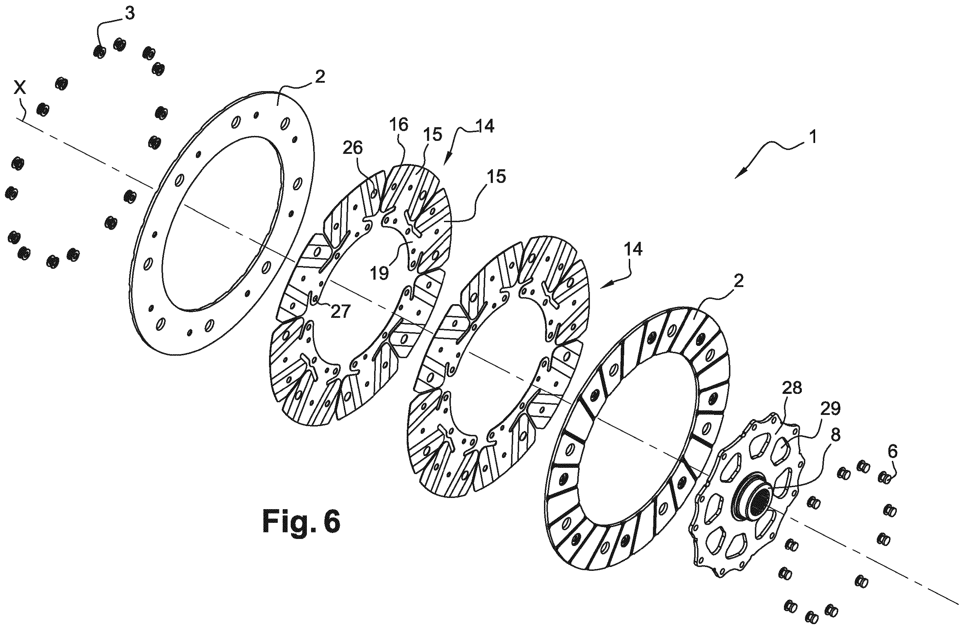

- la figure 6 est une vue éclatée, en perspective, du disque de friction,

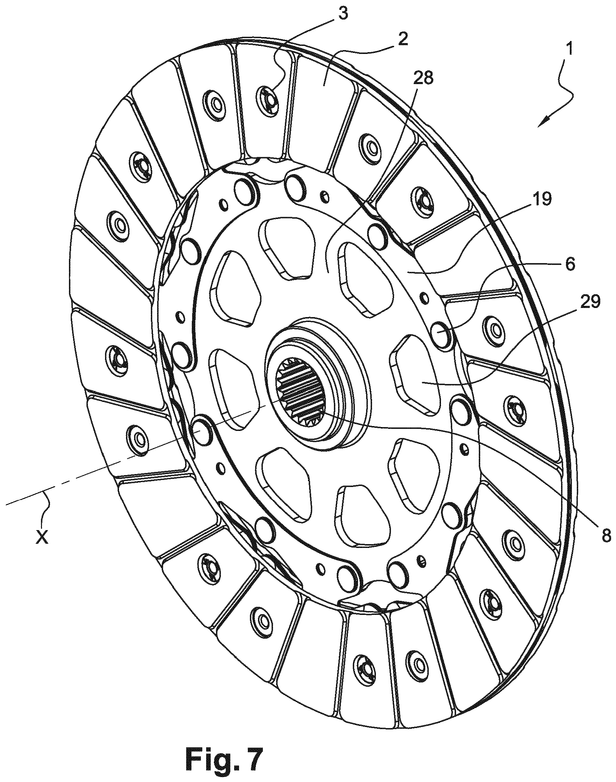

- la figure 7 est une vue en perspective du disque de friction,

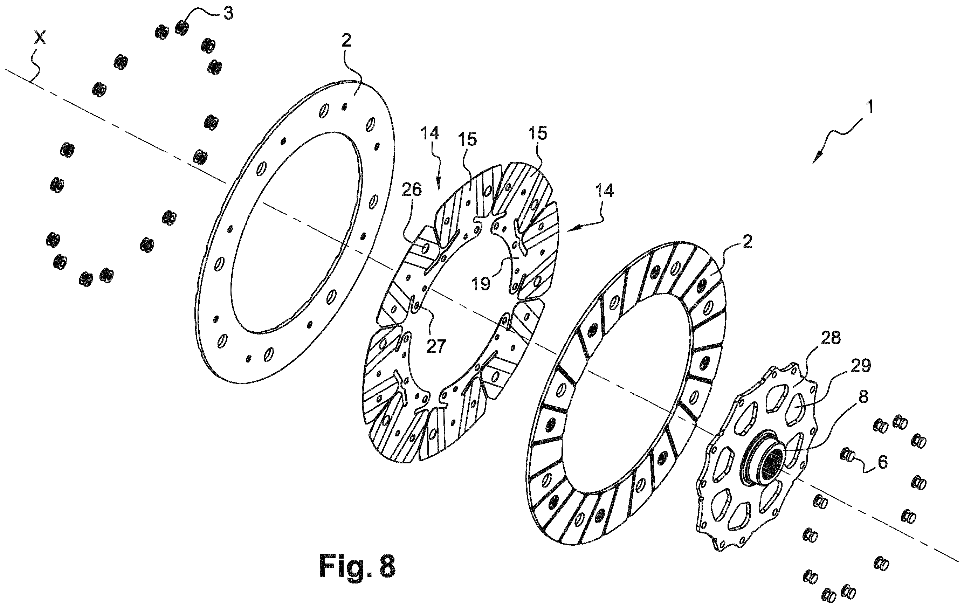

- la figure 8 est une vue éclatée, en perspective du disque de friction selon une quatrième forme de réalisation non couverte par l'invention.

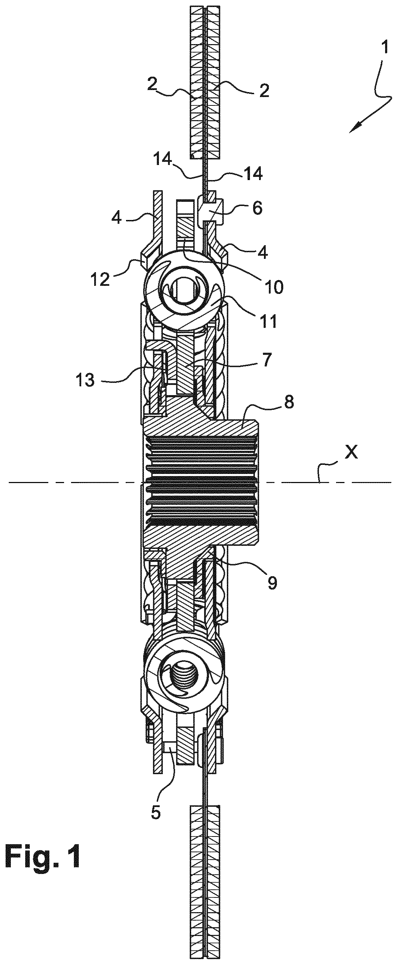

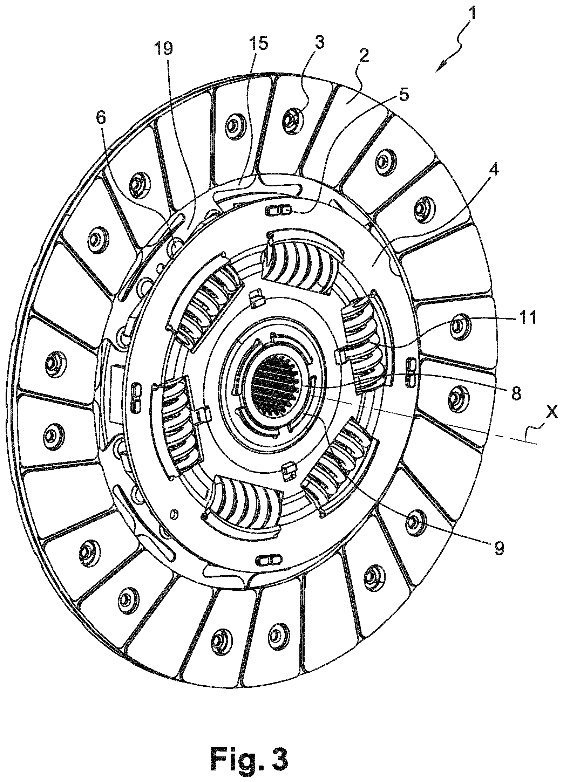

Les figures 1 à 4 représentent un disque de friction 1 pour un véhicule automobile selon une première forme de réalisation de l'invention. Celui-ci comporte un axe X et des garnitures annulaires de friction 2 situées axialement de part et d'autre d'un support par l'intermédiaire de rivets 3. Les termes « axial » et « radial » sont définis par référence à l'axe X. Le disque de friction 1 comporte en outre deux rondelles de guidage annulaires 4 fixées l'une à l'autre par l'intermédiaire d'entretoises 5 s'étendant axialement et rivetées à leurs extrémités sur lesdites rondelles de guidage 4. Le support est fixé à l'une desdites rondelles de guidage 4 par l'intermédiaire de rivets 6.

Le disque de friction 1 comporte en outre un voile annulaire radial 7, situé axialement entre lesdites rondelles de guidage 4. La périphérie radialement interne du voile 7 est couplée en rotation à un moyeu cannelé 8, destiné à être couplé en rotation à un arbre d'entrée d'une boîte de vitesses.

Les rondelles de guidage 4 sont montées et guidées en rotation autour du moyeu 8, par l'intermédiaire d'un palier lisse 9.

Le voile annulaire 7 comporte des fenêtres 10 s'étendant circonférentiellement et dans lesquelles sont montés des organes élastiques, en particulier des ressorts de compression hélicoïdaux 11. Des fenêtres 12 sont également ménagées dans les rondelles de guidage 4 afin de permettre le montage des organes élastiques 11. Chaque organe élastique 11 comporte une extrémité en appui sur le voile annulaire 7 et une extrémité en appui sur les rondelles de guidage 4. De cette manière, les rondelles de guidage 4 sont mobiles en rotation par rapport au voile annulaire 7, sur une plage angulaire déterminée, à l'encontre d'un couple résistant exercé par les organes élastiques 11. Des moyens de friction 13 sont également montés entre les rondelles de guidage 4 et le voile annulaire 7. Les organes élastiques 11 et les moyens de friction 13 forment un étage d'amortissement des vibrations et des acyclismes de rotation.

Le support est formé de deux étages de secteurs 14, chaque étage étant composé de secteurs 14 distincts et adjacents formant un anneau. Dans cette forme de réalisation, chaque étage comporte quatre secteurs 14.

Les secteurs 14 ont de préférence des structures identiques.

Chaque secteur 14 se présente sous la forme d'une tôle métallique ou d'un clinquant dont l'épaisseur est par exemple comprise entre 0,3 et 0,6 mm.

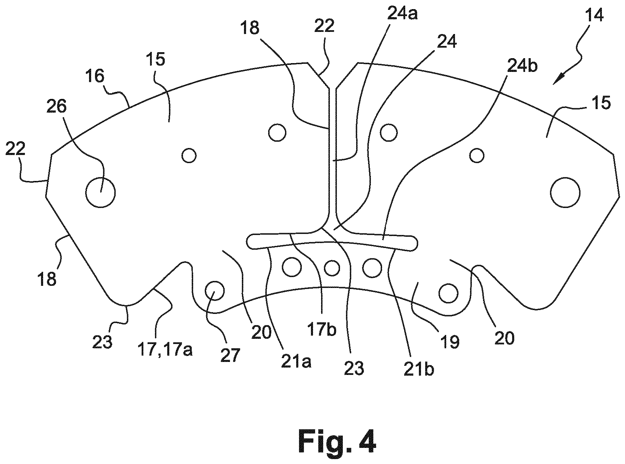

Comme cela est mieux visible à la figure 4, chaque secteur 14 comprend deux pales 15 comportant chacune un bord radialement externe 16 et un bord radialement interne 17 reliés par des bords latéraux 18. Chaque secteur 14 comporte en outre une zone de liaison 19 s'étendant circonférentiellement, le bord radialement interne 17 de chaque pale 18 dudit secteur 14 étant rattaché à la zone de liaison 19, par l'intermédiaire d'une patte 20 s'étendant radialement.

La dimension circonférentielle de chaque patte 20 est inférieure à la dimension circonférentielle de la pale correspondante 15.

Le bord radialement externe 16 de chaque pale est courbe, en forme d'arc de cercle, et est situé en regard du bord radialement externe des garnitures de friction 2.

Le bord radialement interne 17 de chaque pale comporte une première et une seconde zones 17a, 17b situées respectivement de part et d'autre de la patte correspondante 20, lesdites zones 17a, 17b étant globalement rectilignes et s'étendant de façon oblique par rapport à la direction circonférentielle, les extrémités desdites zones rectilignes 17a, 17b qui sont éloignées de la patte correspondante 20 étant situées radialement à l'intérieur par rapport aux extrémités desdites zones rectilignes 17a, 17b qui sont proches de ladite patte 20.

Par ailleurs, le bord radialement externe de la zone de liaison 19 comporte deux zones rectilignes 21a, 21b situées circonférentiellement entre lesdites pattes 20 et situées de part et d'autre du centre de la zone de liaison. Lesdites zones 21a, 21b s'étendent de façon oblique par rapport à la direction circonférentielle, les extrémités desdites zones rectilignes 21a, 21b qui sont éloignées des pattes 20 étant situées radialement à l'intérieur par rapport aux extrémités desdites zones rectilignes 21a, 21b qui sont proches desdites pattes.

De plus, les bords latéraux des pales 18 s'étendent radialement, au moins en partie.

Les bords radialement externes 16 des pales 15 et les bords latéraux correspondants 18 des pales 15 sont reliés par des zones rectilignes 22 s'étendant de façon oblique par rapport à la direction radiale et par rapport à la direction circonférentielle. En outre, les bords radialement internes 17 des pales 15 et les bords latéraux correspondants 18 des pales 15 sont reliés par des zones arrondies 23.

Lesdites zones rectilignes obliques 17a, 17b, 21a, 21b ainsi que les bords latéraux adjacents 18 d'un même secteur 15 définissent une fente 24 de forme complexe, présentant une partie radiale 24a, rattachée à une partie 24b en forme générale de V dont le sommet est tourné radialement vers l'intérieur. En variante, la partie 24b peut être sensiblement rectiligne et perpendiculaire à la direction radiale.

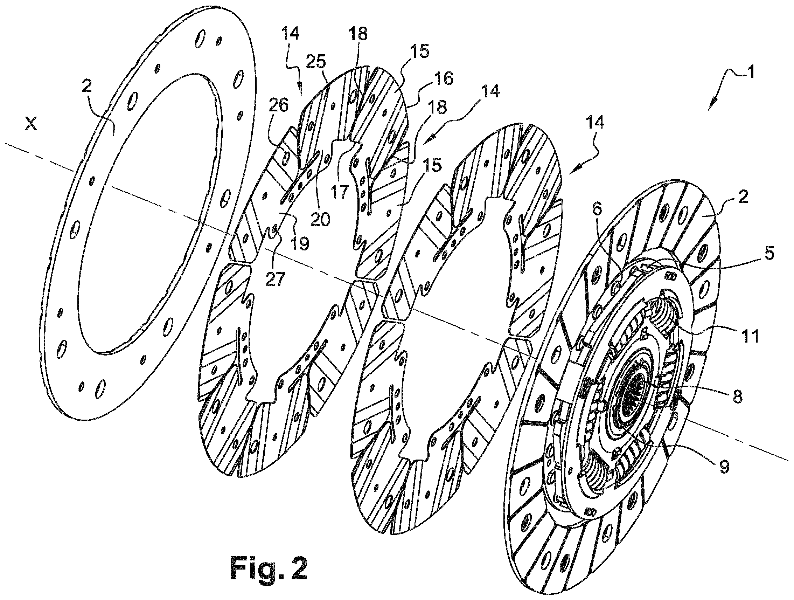

Chaque pale 15 comporte des plis ou des déformations 25 aptes à conférer à ladite pale 15 une élasticité dans la direction axiale, comme cela est mieux visible à la figure 2 par exemple.

Chaque pale 15 comporte des trous 26 servant à la fixation des garnitures 2 à l'aide des rivets 3. Par ailleurs, chaque zone de liaison 19 comporte des trous 27 servant à la fixation du secteur 15 sur la rondelle de guidage correspondante 4, par l'intermédiaire des rivets 6.

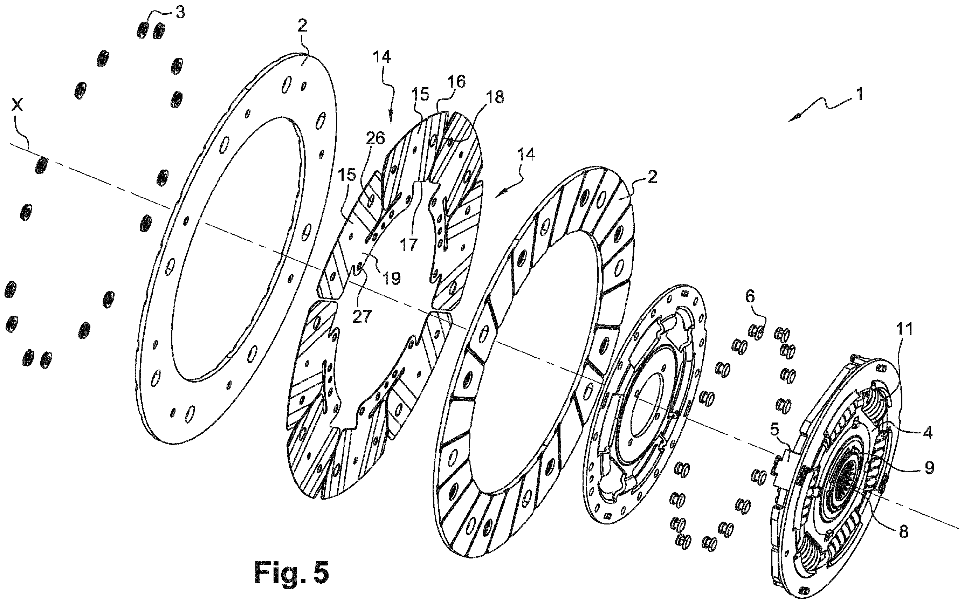

La figure 5 illustre une deuxième forme de réalisation du disque de friction 1 non couverte par l'invention, qui diffère de celle exposée en référence aux figures 1 à 4 en ce que le support ne comporte qu'un seul étage de secteurs 14.

Les figures 6 et 7 représentent une troisième forme de réalisation, qui diffère de celle exposée en référence aux figures 1 à 4 en ce que le support formé par les secteurs 14 est fixé à un voile annulaire 28 solidaire ou venant de matière avec le moyeu central cannelé 8.

Le voile 28 est ajouré et comporte ainsi des lumières 29, par exemple de forme générale trapézoïdale. Les zones de liaison 19 des secteurs 14 sont fixées en périphérie radialement externe du voile 28 par l'intermédiaire des rivets 6. Un tel disque de friction 1 est dit rigide en ce qu'il est dépourvu de moyens d'amortissement de torsion, contrairement à celui exposé en référence aux figures 1 à 4.

La figure 8 illustre une quatrième forme de réalisation du disque de friction 1 non couverte par l'invention, qui diffère de celle exposée en référence aux figures 6 et 7 en ce que le support ne comporte qu'un seul étage de secteurs 14.

Dans chacune des formes de réalisation exposées ci-dessus, les pales 15 sont regroupées par paires au sein d'un même secteur 14, de sorte que le nombre de pièces du disque de friction 1 est limité par comparaison avec l'art antérieur où toutes les pales sont distinctes les unes des autres. Par ailleurs, le nombre de rivets 6 utilisés pour la fixation des secteurs 14 sur le voile 28 ou la rondelle de guidage correspondante 4 peut être réduit.

## Revendications

1. Disque de friction (1), notamment pour véhicule automobile, comportant au moins une garniture de friction annulaire (2) montée sur un support, **caractérisé en ce que** ledit support comporte au moins un secteur (14) comprenant deux pales (15) comportant chacune un bord radialement externe (16) et un bord radialement interne (17) reliés par des bords latéraux (18), les secteurs (14) étant distincts les uns des autres et chaque secteur (14) comportant une zone de liaison (19) s'étendant circonférentiellement, le bord radialement interne (17) de chaque pale (15) dudit secteur (14) étant rattaché à la zone de liaison (19), par l'intermédiaire d'une patte (20) s'étendant radialement,
**caractérisé en ce que** le disque de friction comporte au moins deux secteurs (14) empilés, agencés axialement en regard l'un de l'autre, la garniture de friction (2) étant montée sur les deux secteurs empilés.

2. Disque de friction (1) selon la revendication 1, **caractérisé en ce que** la dimension circonférentielle de chaque patte (20) est inférieure à la dimension circonférentielle de la pale correspondante (15).

3. Disque de friction (1) selon la revendication 1 ou 2, **caractérisé en ce que** le bord radialement externe (16) de chaque pale (15) est courbe et est situé en regard du bord radialement externe de la garniture de friction (2).

4. Disque de friction (1) selon l'une des revendications 1 à 3, **caractérisé en ce que** le bord radialement interne (17) de chaque pale (15) comporte une première et une seconde zones (17a, 17b) situées respectivement de part et d'autre de la patte correspondante (20), lesdites zones (17a, 17b) étant globalement rectilignes et s'étendant de façon oblique par rapport à la direction circonférentielle, les extrémités desdites zones rectilignes (17a, 71b) qui sont éloignées de la patte correspondante (20) étant situées radialement à l'intérieur par rapport aux extrémités desdites zones rectilignes (17a, 17b) qui sont proches de ladite patte (20).

5. Disque de friction (1) selon l'une des revendications 1 à 4, **caractérisé en ce que** le bord radialement externe de la zone de liaison (19) comporte deux zones rectilignes (21a, 21b) situées circonférentiellement entre lesdites pattes (20) et s'étendant de façon oblique par rapport à la direction circonférentielle, les extrémités desdites zones rectilignes (21a, 21b) qui sont éloignées des pattes (20) étant situées radialement à l'intérieur par rapport aux extrémités desdites zones rectilignes (21a, 21b) qui sont proches desdites pattes (20).

6. Disque de friction (1) selon l'une des revendications 1 à 5, **caractérisé en ce que** les bords latéraux (18) des pales s'étendent radialement, au moins en partie.

7. Disque de friction (1) selon l'une des revendications 1 à 6, **caractérisé en ce que** les bords radialement externes (16) des pales (15) ou les bords radialement internes (17) des pales (15), d'une part, et les bords latéraux correspondants (18) des pales (15), d'autre part, sont reliés par des zones arrondies (23) et/ou par des zones rectilignes (22) s'étendant de façon oblique par rapport à la direction radiale et par rapport à la direction circonférentielle.

8. Disque de friction (1) selon l'une des revendications 1 à 7, **caractérisé en ce que** chaque pale (15) est formée par une tôle et comporte des plis ou des déformations (25) aptes à conférer à ladite pale (15) une élasticité dans la direction axiale.

9. Disque de friction (1) selon l'une des revendications 1 à 8, **caractérisé en ce qu'**il comporte un élément de sortie de couple (8) destiné à être couplé à un arbre d'entrée d'une boîte de vitesses, l'élément de sortie de couple (8) étant relié au support (14) par l'intermédiaire de moyens d'amortissement de torsion (4, 7, 11).

## Patentansprüche

1. Reibscheibe (1), insbesondere für ein Kraftfahrzeug, die mindestens einen ringförmigen Reibbelag (2) umfasst, der an einer Stütze befestigt ist, **dadurch gekennzeichnet, dass** die Stütze mindestens einen Sektor (14) umfasst, der zwei Blätter (15) aufweist, die jeweils einen radial äußeren Rand (16) und einen radial inneren Rand (17), die durch Seitenränder (18) verbunden sind, umfassen, wobei die Sektoren (14) voneinander getrennt sind und jeder Sektor (14) eine sich umfangsmäßig erstreckende Verbindungszone (19) umfasst, wobei der radial innere Rand (17) jedes Blatts (15) des Sektors (14) mit einer sich radial erstreckenden Lasche (20) an der Verbindungszone (19) befestigt ist
**dadurch gekennzeichnet, dass** die Reibscheibe mindestens zwei gestapelte Sektoren (14) umfasst, die einander axial gegenüber angeordnet sind, wobei der Reibbelag (2) an den beiden gestapelten Sektoren befestigt ist.

2. Reibscheibe (1) nach Anspruch 1, **dadurch gekennzeichnet, dass** die Umfangsabmessung jeder Lasche (20) weniger als die Umfangsabmessung des entsprechenden Blatts (15) beträgt.

3. Reibscheibe (1) nach Anspruch 1 oder 2, **dadurch gekennzeichnet, dass** der radial äußere Rand (16) jedes Blatts (15) gekrümmt ist und sich gegenüber dem radial äußeren Rand des Reibbelags (2) befindet.

4. Reibscheibe (1) nach einem der Ansprüche 1-3, **dadurch gekennzeichnet, dass** der radial innere Rand (17) jedes Blatts (15) eine erste und eine zweite Zone (17a, 17b) umfasst, die sich jeweils beidseits der entsprechenden Lasche (20) befinden, wobei die Zonen (17a, 17b) komplett geradlinig sind und sich schräg zur Umfangsrichtung erstrecken, wobei sich die Enden der geradlinigen Zonen (17a, 71b), die von der entsprechenden Lasche (20) beabstandet sind, radial innen bezüglich der Enden der geradlinigen Zonen (17a, 17b), die sich nahe an der Lasche (20) befinden, befinden.

5. Reibscheibe (1) nach einem der Ansprüche 1-4, **dadurch gekennzeichnet, dass** der radial äußere Rand der Verbindungszone (19) zwei geradlinige Zonen (21a, 21b) umfasst, die sich umfangsmäßig zwischen den Laschen (20) befinden und sich schräg zur Umfangsrichtung erstrecken, wobei sich die Enden der geradlinigen Zonen (21a, 21b), die von den Laschen (20) beabstandet sind, radial innen bezüglich der Enden der geradlinigen Zonen (21a, 21b), die sich nahe an den Laschen (20) befinden, befinden.

6. Reibscheibe (1) nach einem der Ansprüche 1-5, **dadurch gekennzeichnet, dass** sich die Seitenränder (18) der Blätter, zumindest zum Teil, radial erstrecken.

7. Reibscheibe (1) nach einem der Ansprüche 1-6, **dadurch gekennzeichnet, dass** die radial äußeren Ränder (16) der Blätter (15) oder die radial inneren Ränder (17) der Blätter (15) einerseits und die entsprechenden Seitenränder (18) der Blätter (15) andererseits durch abgerundete Zonen (23) und/oder durch geradlinige Zonen (22), die sich schräg zur radialen Richtung und zur Umfangsrichtung erstrecken, verbunden sind.

8. Reibscheibe (1) nach einem der Ansprüche 1-7, **dadurch gekennzeichnet, dass** jedes Blatt (15) durch ein Blech gebildet wird und Knicke und Verformungen (25) umfasst, die dem Blatt (15) eine Elastizität in der axialen Richtung verleihen können.

9. Reibscheibe (1) nach einem der Ansprüche 1-8, **dadurch gekennzeichnet, dass** sie ein Drehmomentausgangselement (8) zur Kopplung mit einer Eingangswelle eines Getriebes umfasst, wobei das Drehmomentausgangselement (8) durch Torsionsdämpfungsmittel (4, 7, 11) mit der Stütze (14) verbunden ist.

## Claims

1. Friction disc (1), in particular for a motor vehicle, having at least one annular friction lining (2) mounted on a support, **characterized in that** the said support has at least one sector (14) comprising two blades (15) each having a radially outer edge (16) and a radially inner edge (17) connected by lateral edges (18), each sector (14) having a circumferentially extending connection region (19), the radially inner edge (17) of each blade (15) of the said sector (14) being attached to the connection region (19) via a radially extending tab (20) wherein the friction disc has at least two stacked sectors (14) arranged axially opposite one another, the friction lining (2) being mounted on the two stacked sectors.

2. Friction disc (1) according to Claim 1, **characterized in that** the circumferential dimension of each tab (20) is less than the circumferential dimension of the corresponding blade (15).

3. Friction disc (1) according to Claim 1 or 2, **characterized in that** the radially outer edge (16) of each blade (15) is curved and is situated opposite the radially outer edge of the friction lining (2).

4. Friction disc (1) according to one of Claims 1 to 3, **characterized in that** the radially inner edge (17) of each blade (15) has first and second regions (17a, 17b) respectively situated on either side of the corresponding tab (20), the said regions (17a, 17b) being wholly rectilinear and extending obliquely with respect to the circumferential direction, the ends of the said rectilinear regions (17a, 17b) that are remote from the corresponding tab (20) being situated radially to the inside with respect to the ends of the said rectilinear regions (17a, 17b) that are close to the said tab (20).

5. Friction disc (1) according to one of Claims 1 to 4, **characterized in that** the radially outer edge of the connection region (19) has two rectilinear regions (21a, 21b) situated circumferentially between the said tabs (20) and extending obliquely with respect to the circumferential direction, the ends of the said rectilinear regions (21a, 21b) that are remote from the tabs (20) being situated radially to the inside with respect to the ends of the said rectilinear regions (21a, 21b) that are close to the said tabs (20).

6. Friction disc (1) according to one of Claims 1 to 5, **characterized in that** the lateral edges (18) of the blades extend radially, at least in part.

7. Friction disc (1) according to one of Claims 1 to 6, **characterized in that** the radially outer edges (16) of the blades (15) or the radially inner edges (17) of the blades (15), on the one hand, and the corresponding lateral edges (18) of the blades (15), on the other hand, are connected by rounded regions (23) and/or by rectilinear regions (22) extending obliquely with respect to the radial direction and with respect to the circumferential direction.

8. Friction disc (1) according to one of Claims 1 to 7, **characterized in that** each blade (15) is formed by a metal sheet and has folds or deformations (25) able to impart elasticity to the said blade (15) in the axial direction.

9. Friction disc (1) according to one of Claims 1 to 8, **characterized in that** it has a torque output element (8) intended to be coupled to an input shaft of a gearbox, the torque output element (8) being connected to the support (14) via torsion damping means (4, 7, 11).
